# EUROPÄISCHE PATENTANMELDUNG

(11) **EP 2 664 754 A1**
(43) Veröffentlichungstag der Anmeldung: **20.11.2013**
(21) Anmeldenummer: 13164053.4
(22) Anmeldetag: 17.04.2013
(51) Int. Cl.: F01M 1/08, F16N 7/30, F16N 15/04

(54) **Verfahren und Zylinderschmiereinrichtung zur Schmierung einer Kolben-Zylinder-Einheit einer Hubkolbenbrennkraftmaschine**

(30) Priorität: 14.05.2012 EP 12167889
(71) Anmelder: Wärtsilä Schweiz AG, 8401 Winterthur (CH)
(72) Erfinder: Räss, Konrad, 8457 Humlikon (CH)
(74) Vertreter: Sulzer Management AG

(57) **Zusammenfassung**

Die Erfindung betrifft ein Verfahren und eine Zylinderschmiereinrichtung zur Schmierung einer Kolben-Zylinder-Einheit einer Hubkolbenbrennkraftmaschine insbesondere eines langsam laufenden Grossdieselmotors. Zur Schmierung des Kolbens wird Schmierstoff über wenigstens eine Schmiermittelöffnung in einen so genannten Zylinderliner eingebracht.

Um eine effektive Schmierung des Kolbens auch bei sehr geringen Schmierstoffmengen zu ermöglichen, wird erfindungsgemäss vorgeschlagen, Schmiermittel, welches über die Schmiermittelöffnung in den Zylinderliner eingebracht wird, vor dem Einbringen in einen Zylinderliner durch Mischen von Schmierstoff mit einem Trägerfluid zu erzeugen. Dazu kann beispielsweise eine Schmiermittelpumpe (237) gleichzeitig Schmierstoff aus einem Schmierstoffreservoir (235) und Trägerfluid in Form von Wasser aus einem Trägerfluidreservoir (244) ansaugen. Der Schmierstoff und das Wasser vermischen sich dabei zum Schmiermittel, das dann in den Zylinderliner eingebracht wird.

## Beschreibung

Die Erfindung betrifft ein Verfahren zur Schmierung einer Kolben-Zylinder-Einheit einer Hubkolbenbrennkraftmaschine insbesondere eines langsam laufenden Grossdieselmotors gemäß dem Oberbegriff des Anspruchs 1 und eine Zylinderschmiereinrichtung für eine Kolben-Zylinder-Einheit einer Hubkolbenbrennkraftmaschine insbesondere für einen langsam laufenden Grossdieselmotor gemäss Anspruch 10.

Grossdieselmotoren werden häufig als Antriebsaggregate für Schiffe oder auch im stationären Betrieb, beispielsweise zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmierstoffverbrauch und auch unmittelbar für die Betriebskosten und damit für die Wirtschaftlichkeit. Damit kommt der komplexen Problematik der Schmierung von Grossdieselmotoren eine immer grössere Bedeutung zu.

Bei Grossdieselmotoren, jedoch nicht nur bei diesen, erfolgt die Schmierung eines sich in einem Zylinder, dem so genannten Zylinderliner hin und her bewegenden Kolbens durch Schmiereinrichtungen im Kolben oder in einer Zylinderwand. Dazu wird Schmierstoff, beispielsweise in Form von Schmieröl eingebracht und damit auf eine Lauffläche der Zylinderwand aufgebracht, um die Reibung zwischen Kolben und Lauffläche und damit die Abnützung der Lauffläche und an einem Kolbenumfang angeordneter Kolbenringe zu minimieren.

Die US 6,547,038 B1 beschreibt dazu beispielsweise ein Verfahren und eine Zylinderschmiereinrichtung zur Schmierung einer Kolben-Zylinder-Einheit einer Hubkolbenbrennkraftmaschine in Form eines Zweitakt-Grossdieselmotors. Der Zweitakt-Grossdieselmotor verfügt über einen Zylinderliner und einen Kolben, welcher entlang einer Kolbenachse im Zylinderliner in axialer Richtung hin- und her bewegbar angeordnet ist. Mittels einer Fördereinrichtung in Form einer Ölpumpe kann Schmierstoff in Form von Schmieröl zu einer Schmiermittelöffnung in Form einer Spritzdüse gefördert werden, über welche das Schmieröl in Form eines Ölnebels in den Zylinderliner eingebracht werden kann.

Um die von einer bestimmten Schmiermitteldüse zu einem bestimmten Zeitpunkt einzubringende Menge an Schmierstoff zu ermitteln, sind verschiedene Verfahren bekannt. In einfachen Fällen wird die Schmierstoffmenge, eventuell unter Berücksichtigung der Qualität des verwendeten Treibstoffs und des Schmierstoffs selbst, in Abhängigkeit vom Betriebszustand der Hubkolbenbrennkraftmaschine gesteuert, zum Beispiel als Funktion der Last oder der Drehzahl, wobei aufgrund von bereits geleisteten Betriebsstunden auch der Verschleisszustand der Gegenlaufpartner Berücksichtigung finden kann.

Neben der Schmierung des Zylinders, also der Herabsetzung der Reibung zwischen Kolben und Zylinderlauffläche, genauer zwischen den Kolbenringen und der Lauffläche der Zylinderwand, dient das Schmiermittel unter anderem auch zur Neutralisation aggressiver Säuren, insbesondere von schwefelhaltigen Säuren, die beim Verbrennungsvorgang im Brennraum des Motors entstehen. Daher können je nach verwendetem Treibstoff unterschiedliche Sorten von Schmiermittel zum Einsatz kommen, die sich unter anderem in ihrer Neutralisationsfähigkeit, für die der so genannte BN-Wert des Schmiermittels ein Mass ist, unterscheiden. So kann es von Vorteil sein, bei einem hohen Schwefelgehalt im Brennstoff ein Schmiermittel mit einem höheren BN-Wert zu verwenden, als bei einem Brennstoff mit einem niedrigeren Schwefelgehalt, weil ein Schmiermittel mit einem höheren BN-Wert eine stärkere Neutralisationswirkung gegenüber Säuren aufweist. Auch dient das Schmiermittel zum Beispiel als Bindemittel für Wasser, das mit der Spülluft oder auf andere Weise in den Zylinder des Grossdieselmotors gelangen kann.

Heute liegt bei modernen Motoren, wie z.B. den RTA-Motoren von Wärtsilä, die Schmierstofffördermenge bei ca. 1.0 g/kWh und weniger, wobei für eine effektive Schmierung sowohl die erforderliche Schmierstoffmenge, also auch der korrekte Zeitpunkt, an dem der Schmierstoff eingebracht wird, möglichst genau eingehalten werden sollte.

Der Schmierstoff wird meist über mehr als eine, beispielsweise über acht Schmierstofföffnungen in den Zylinderliner eingebracht, so dass bei den genannten Schmierstoffmengen pro Einbringvorgang und Schmierstofföffnung weniger als 0,1 g Schmierstoff eingebracht wird.

Insbesondere aus Kostengründen soll die Schmierstoffmenge noch weiter reduziert werden, was zu noch geringeren Schmierstoffmengen pro Einbringvorgang und Schmierstofföffnung führt. Eine exakte zeitliche und mengenmässige Dosierung derartig kleiner Schmierstoffmengen ist mit hohem technischem Aufwand verbunden. Ausserdem werden dann pro Einbringvorgang nur noch sehr wenige und kleine Schmierstofftropfen erzeugt. Damit besteht die Gefahr, dass die erzeugten Schmierstofftropfen die Lauffläche der Zylinderwand gar nicht erreichen und so keine effektive Schmierung erreicht wird.

Demgegenüber ist es die Aufgabe der Erfindung, ein Verfahren und eine Zylinderschmiereinrichtung zur Schmierung einer Kolben-Zylinder-Einheit einer Hubkolbenbrennkraftmaschine vorzuschlagen, welche eine effektive Schmierung des Kolbens auch bei sehr geringen Schmierstoffmengen ermöglichen. Erfindungsgemäß wird diese Aufgabe mit einem Verfahren mit den Merkmalen des Anspruchs 1 und eine Zylinderschmiereinrichtung mit den Merkmalen des Anspruchs 10 gelöst.

Erfindungsgemäss wird das Schmiermittel, welches über die Schmiermittelöffnung in den Zylinderliner eingebracht wird, vor dem Einbringen in den Zylinderliner durch Mischen von Schmierstoff mit einem Trägerfluid erzeugt. Damit ist die Schmiermittelmenge grösser als die Schmierstoffmenge, so dass die sich ergebende Schmiermittelmenge leichter und genauer dosiert werden kann, als die Schmierstoffmenge alleine. Ausserdem werden dann pro Einbringvorgang im Vergleich zum Einbringen von reinem Schmierstoff mehr und grössere Schmiermitteltropfen erzeugt.

Der Effekt der Vergrösserung der eingebrachten Menge an Schmiermittel im Vergleich zum Einbringen von reinem Schmierstoff kann einerseits wie oben beschrieben genutzt werden, um die Schmierstoffmenge weiter zu reduzieren und dennoch gut handhabbare Schmiermittelmengen zu haben. Andererseits ist eine grössere Schmiermittelmenge generell einfacher und genauer zu dosieren als eine kleinere Schmiermittelmenge.

Eine erhöhte Schmiermittelmenge hat ausserdem noch einen weiteren Vorteil. Die Schmiermittelöffnungen sind im Betrieb der Hubkolbenbrennkraftmaschine einer hohen thermischen Belastung ausgesetzt, wobei eine Kühlung durch das vergleichsweise kühle Schmiermittel erfolgt. Wird nun die Schmiermittelmenge vergrössert, so ergibt sich dadurch eine wirkungsvollere Kühlung der Schmiermittelöffnungen.

Unter einem Schmierstoff soll in diesem Zusammenhang der Stoff verstanden werden, der die Reibung zwischen Kolben und Lauffläche vermindert. Der Schmierstoff wird im Stand der Technik meist direkt zur Schmierung des Zylinders eingesetzt. Der Schmierstoff kann auch schon aus einem Gemisch aus verschiedenen Komponenten bestehen. Das Trägerfluid trägt damit nicht zur Reibungsverminderung bei. Es dient auch nicht dazu, Eigenschaften des Schmierstoffs, wie beispielsweise die Temperaturbeständigkeit zu verändern. Die Aufgabe des Trägerfluids ist es nur, das Volumen des Schmiermittels, das in den Zylinder eingebracht werden soll, zu erhöhen.

Der Schmierstoff kann insbesondere als Schmieröl ausgeführt sein. Es kann beispielsweise ein so genanntes HD-Dieselmotorenöl oder ein Mittelalkalisches Dieselmotorenöl verwendet werden. Das Schmieröl kann darüber hinaus Additive enthalten.

Der Schmierstoff kann auch als ein Trockenschmierstoff, wie beispielsweise Molybdänsulfit oder Graphit ausgeführt sein. Der Schmierstoff kann als Pulver verwendet werden oder auch in Form einer Emulsion.

Es ist auch möglich, dass als Schmierstoff eine Kombination aus Schmieröl und Trockenschmierstoff verwendet wird.

Das Trägerfluid kann gasförmig oder insbesondere flüssig ausgeführt sein. Es sollte insbesondere leichter flüchtig sein und insbesondere einen höheren Flammpunkt als das Schmierstoff aufweisen. Als Trägerfluid kann beispielsweise Luft, Luftbestandteile, Kohlendioxid, ein Inertgas (z.B. Stickstoff), Wasser oder ein Alkohol oder eine Mischung aus zwei oder mehr der genannten Bestandteile verwendet werden. Es ist auch möglich, dass das Trägerfluid beispielsweise als ein leichtes Erdölderivat oder ein brennbares Gase (z.B. Methan, Ethan) ausgeführt ist.

Besonders vorteilhaft ist es, wenn als Trägerfluid Wasser verwendet wird. Das Schmiermittel ist in diesem Fall als eine Emulsion aus Schmierstoff und Wasser ausgeführt. Beim Einringen des Schmiermittels in den Zylinderliner verdampft das Wasser quasi sofort und das Schmierstoff kann so wirken, als sei es alleine eingebracht worden.

In Ausgestaltung der Erfindung wird das Schmierstoff mit dem Trägerfluid mit einem auf das Gewicht bezogenen Mischungsverhältnis von 1:2 oder höher gemischt, wobei unter höher beispielsweise ein Verhältnis von 1:3, 1:4, usw. zu verstehen ist. Eine mögliche Obergrenze für das Mischungsverhältnis kann beispielsweise bei 1:10 liegen. Es sind aber auch höhere Mischungsverhältnisse wie beispielsweise 1:20, 1:50 oder 1:100 denkbar.

In Ausgestaltung der Erfindung fördert die Fördereinrichtung das Schmiermittel aus einem Schmiermittelreservoir, welches fertig gemischtes Schmiermittel enthält. Das Schmiermittel wird damit schon vor dem Einfüllen in das Schmiermittelreservoir aus Schmierstoff und Trägerfluid gemischt und dann in das Schmiermittelreservoir eingefüllt. Ein Verfahrensschritt des erfindungsgemässen Verfahrens erfolgt also schon vor dem Einfüllen des Schmiermittels in das Schmiermittelreservoir. Bei dieser Vorgehensweise ist in der Zylinderschmiereinrichtung vorteilhafterweise keine Mischvorrichtung für das Mischen von Schmierstoff und Trägerfluid notwendig. Dies ermöglicht zum einen eine kostengünstige Zylinderschmiereinrichtung. Ausserdem ist es damit auch möglich, eine Zylinderschmiereinrichtung zu verwenden, mit der auch reiner Schmierstoff zur Schmierung eingesetzt werden kann.

In Ausgestaltung der Erfindung fördert eine Fördereinrichtung Schmierstoff aus einem Schmierstoffreservoir, welches vor Erreichen der Schmiermittelöffnung mit dem Trägerfluid zu Schmiermittel vermischt wird. Damit kann auch ein Trägerfluid verwendet werden, das mit dem Schmierstoff keine stabile Mischung bilden kann. Dies betrifft beispielsweise Wasser oder alle gasförmigen Trägerfluide. Die Mischung von Schmierstoff und Trägerfluid kann dabei vor oder nach der Fördereinrichtung erfolgen.

Dabei kann mit der Fördereinrichtung Schmierstoff aus dem Schmierstoffreservoir und Trägerfluid aus einem ersten Trägerfluidreservoir gefördert werden. Damit ist nur eine Fördereinrichtung notwendig, was eine kostengünstige Zylinderschmiereinrichtung ermöglicht. Die Mischung von Schmierstoff und Trägerfluid erfolgt dann vor der Fördereinrichtung, also in einer so genannten Ansaugleitung der Fördereinrichtung.

Es ist auch möglich, dass mit einer Schmierstoff-Fördereinrichtung Schmierstoff aus dem Schmierstoffreservoir und mit einer Trägerfluid-Fördereinrichtung Trägerfluid aus dem ersten Trägerfluidreservoir gefördert wird. Damit ist es möglich, ein gewünschtes Mischungsverhältnis zwischen Schmierstoff und Trägerfluid sehr genau einzustellen.

Ausserdem kann mit der Schmierstoff-Fördereinrichtung Schmierstoff aus dem Schmierstoffreservoir gefördert und Trägerfluid aus einem zweiten Trägerfluidreservoir entnommen werden, in dem das Trägerfluid unter Druck gespeichert ist. Dies ist insbesondere für gasförmige Trägerfluide vorteilhaft einsetzbar. Zwischen dem zweiten Trägerfluidreservoir und einer Mischvorrichtung kann insbesondere ein ansteuerbares Ventil angeordnet sein, mittels welchem eine Zuführung des Trägerfluids sehr genau eingestellt und damit ein gewünschtes Mischungsverhältnis zwischen Schmierstoff und Trägerfluid sehr genau erreicht werden.

Die oben genannte Aufgabe wird auch durch eine Zylinderschmiereinrichtung für eine Kolben-Zylinder-Einheit einer Hubkolbenbrennkraftmaschine, insbesondere eines Zweitakt-Grossdieselmotors gelöst, mittels welcher Schmiermittel aus einer Schmiermittelöffnung ausgebracht und damit in einen Zylinderliner eingebracht werden kann. Erfindungsgemäss weist die Zylinderschmiereinrichtung eine Mischvorrichtung auf, welche ausgangsseitig mit der Schmiermittelöffnung in Fluidverbindung bringbar ist. Eingangsseitig kann der Mischvorrichtung Trägerfluid und mittels einer Schmierstoff-Fördereinrichtung Schmierstoff zugeführt werden. Die Mischvorrichtung ist so ausgeführt, dass sich das Trägerfluid und der Schmierstoff zu Schmiermittel vermischt, welches dann der Schmiermittelöffnung zugeführt werden kann.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine Zylinderanordnung eines Zweitakt-Grossdieselmotors,
- Fig. 2: einen in einem Zylinderliner angeordneten Kolben mit Schmiermittelversorgung,
- Fig. 3: einen Ausschnitt einer zweiten Ausführungsform einer Schmiermittelversorgung,
- Fig. 4: einen Ausschnitt einer dritten Ausführungsform einer Schmiermittelversorgung und
- Fig. 5: einen Ausschnitt einer vierten Ausführungsform einer Schmiermittelversorgung.

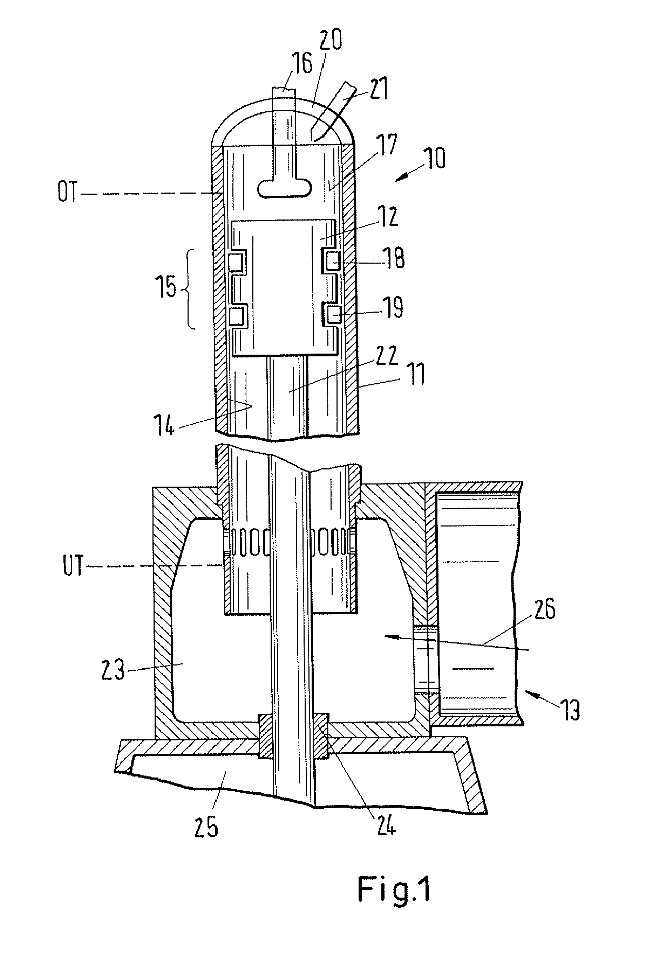

Gemäss Fig. 1 weist eine Zylinderanordnung eine Kolben-Zylinder-Einheit 10 mit einem Zylinder in Form eines Zylinderliners 11 und einen Kolben 12 auf. Die Zylinderanordnung verfügt ausserdem über ein Frischluftzufuhrsystem 13.

Die Zylinderanordnung der Fig. 1 ist eine typische Anordnung, wie sie für längs gespülte Zweitakt-Grossdieselmotoren an sich aus dem Stand der Technik bekannt ist.

Im Zylinderliner 11 ist der Kolben 12 entlang einer Zylinderwand 14 des Zylinderliners 11 hin- und her bewegbar angeordnet. Der Kolben 12 führt die hin und her Bewegung zwischen zwei Umkehrpunkten, nämlich einem oberen Totpunkt (OT) und einem unteren Totpunkt (UT) aus, wobei der obere Totpunkt (OT) zwischen dem unteren Totpunkt (UT) und einem Auslassventil 16 angeordnet ist.

Der Kolben 12 umfasst eine Kolbenringpackung 15, die hier schematisch mit lediglich zwei Kolbenringen dargestellt ist, nämlich mit einem dem Auslassventil 16 und damit auch einem Brennraum 17 am nächsten gelegenen ersten, obersten Kolbenring 18, der auch als Topring bezeichnet wird, und einem zweiten Kolbenring 19, der bezüglich des Auslassventils 16 unterhalb des ersten Kolbenrings 18 angeordnet ist.

Der Brennraum 17 ist darstellungsgemäss oben durch einen Zylinderdeckel 20 mit einer Einspritzdüse 21, mittels welcher Kraftstoff in den Brennraum 17 eingespritzt werden kann, und dem Auslassventil 16, das in Fig. 1 in einer geöffneten Position dargestellt ist, begrenzt.

Der Kolben 12 ist in an sich bekannter Weise über eine Kolbenstange 22 mit einem in Fig. 1 nicht dargestellten Kreuzkopf verbunden, von dem aus die hin- und her Bewegung des Kolbens 12 während des Betriebs des Grossdieselmotors auf eine ebenfalls nicht dargestellte Kurbelwelle des Grossdieselmotors übertragen wird. Die Kolbenstange 22 ist durch einen Kolbenunterseitenraum 23, der sich darstellungsgemäss bezüglich dem Auslassventil 16 unten an den Zylinderliner 11 anschliesst, und eine Stopfbuchse 24 geführt, die den Kolbenunterseitenraum 23 gegen einen darunter liegenden Kurbelwellenraum 25 abdichtet, so dass keine Frischluft, symbolisiert durch einen Pfeil 26, die ein ebenfalls nicht dargestellter Turbolader unter einem hohen Druck, z.B. unter einem Druck von vier bar dem Kolbenunterseitenraum 23 zuführt, aus dem Kolbenunterseitenraum 23 in den Kurbelwellenraum 25 gelangen kann.

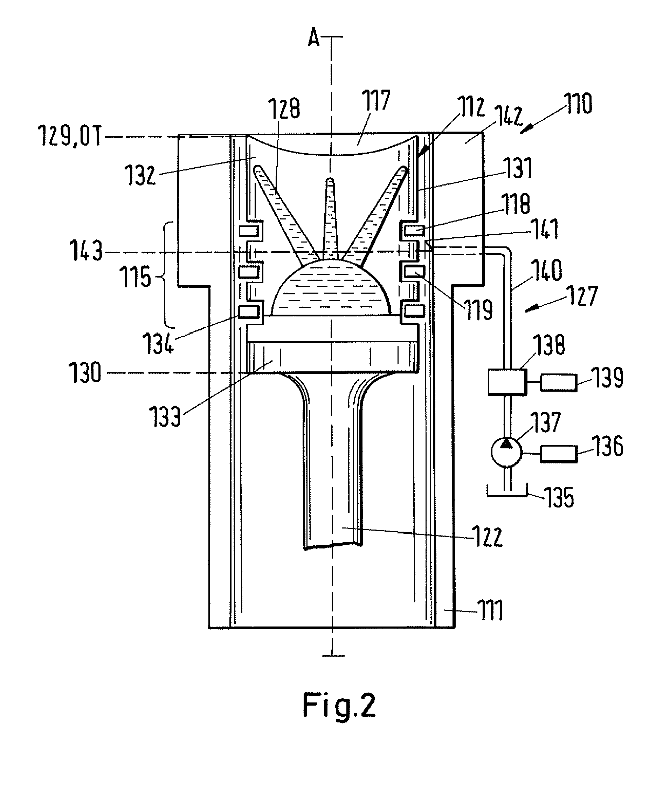

In Fig. 2 ist ein Ausschnitt einer Kolben-Zylinder-Einheit 110 mit einer Zylinderschmiereinrichtung 127 dargestellt. Die Kolben-Zylinder-Einheit 110 ist vergleichbar mit der Kolben-Zylinder-Einheit 10 aus Fig. 1 aufgebaut. In Fig. 2 sind allerdings nur die für die Beschreibung der Zylinderschmiereinrichtung 127 relevanten Bauteile der Kolben-Zylinder-Einrichtung 110 dargestellt.

Ein Kolben 112 ist als ein innen mit einem Kühlöl 128 gekühlter Kolben 112 ausgeführt, wobei das Kühlöl 128 über nicht dargestellte Versorgungsleitungen zu- und abgeführt wird.

Der Kolben 112 der Kolben-Zylinder-Einrichtung 110 ist in der Fig. 2 in einer OT-Position dargestellt, in der er sich im oberen Totpunkt (OT) befindet und in der er sich damit auch im Betrieb des Grossdieselmotors für einen Augenblick nicht bewegt und somit eine Geschwindigkeit von 0 aufweist. Der obere Totpunkt (OT) ist dabei auf eine Kolbenoberkante 129 bezogen. Die Kolbenoberkante 129 wird durch den in Richtung eines in Fig. 2 nicht dargestellten Auslassventils obersten Punkt einer Mantelfläche 131 des Kolbens 112 definiert. Der Kolben 112 ist in Richtung des in Fig. 2 nicht dargestellten unteren Totpunkts entlang einer Kolbenachse A in einem Zylinderliner 111 in axialer Richtung hin und her bewegbar angeordnet.

Der Kolben 112 ist zweistückig aufgebaut. Er setzt sich aus einer so genannten Kolbenkrone 132 und einem an die Kolbenkrone 132 mit nicht dargestellten Schrauben angeschraubten so genannten Kolbenhemd 133 zusammen, wobei die Kolbenkrone 132 in Richtung Auslassventil und das Kolbenhemd 133 in Richtung eines in Fig. 2 nicht dargestellten Kolbenunterseitenraums angeordnet ist. Das Kolbenhemd 133 weist eine zylinderförmige Mantelfläche auf, deren in Richtung Kolbenunterseitenraum unterster Punkt eine Zylinderunterkante 130 definiert.

An der Mantelfläche 131 der Kolbenkrone 132 sind drei Kolbenringe angeordnet, ein in Richtung Auslassventil erster, oberster Kolbenring 118, ein in Richtung Kolbenunterkante 130 benachbarter zweiter Kolbenring 119 und ein zum zweiten Kolbenring 119 in Richtung Kolbenunterkante 130 benachbarter dritter Kolbenring 134.

Die Zylinderschmiereinrichtung 127 weist ein Schmiermittelreservoir 135 auf, aus welchem eine von einem Elektromotor 136 angetriebene Schmiermittelpumpe 137 Schmiermittel fördern kann. Nach der Schmiermittelpumpe 137 ist eine Ventilanordnung 138 angeordnet, mittels welcher eine Schmiermittelzuführleitung 140 geschlossen oder geöffnet werden kann. Die Ventilanordnung 138 wird von einer Steuerungseinrichtung 139 angesteuert. Die Schmiermittelzuführleitung 140 führt zu einer im Zylinderliner 111 an einer axialen Position 143 angeordneten Schmiermittelöffnung 141, welche so angeordnet ist, dass Schmiermittel tangential in den Zylinderliner 111 eingebracht werden kann. In der Fig. 2 ist nur eine Schmiermittelöffnung 141 dargestellt, die Zylinderschmiereinrichtung 127 weist aber insgesamt acht gleichmässig über den Umfang des Zylinderliners 111 verteilte Schmierstofföffnungen auf. Durch eine entsprechende Ansteuerung der Ventilanordnung 138 durch die Steuereinrichtung 139 kann die Ventilanordnung 138 geöffnet und so eine Verbindung zwischen der Schmiermittelpumpe 137 und der Schmiermittelöffnung 141 hergestellt und damit Schmiermittel in den Zylinderliner 111 eingebracht werden. Der genaue Aufbau der Zylinderschmiereinrichtung 127 ist hier nicht weiter von Bedeutung, weshalb die Zylinderschmiereinrichtung 127 sehr vereinfacht dargestellt ist.

Die Steuerungseinrichtung 139 bestimmt den Zeitpunkt und die Menge des eingebrachten Schmiermittels hauptsächlich in Abhängigkeit vom Betriebspunkt der Hubkolbenbrennkraftmaschine und von der Kraftstoffzusammensetzung.

Der Zylinderliner 111 weist in seinem oberen, in Richtung Auslassventil zugeordneten Bereich einen Kühlmantel 142 auf, in dem nicht dargestellte, von Kühlmittel durchströmte Kühlkanäle angeordnet sind. Der Kühlmantel 142 dient zur Kühlung des Zylinderliners 111 im Bereich des Brennraums. Die Schmiermittelöffnung 141 ist im Bereich des Kühlmantels 142 angeordnet. Die Schmiermittelöffnung kann auch unterhalb des Kühlmantels angeordnet sein.

Im nur sehr schematisch dargestellten Schmierstoffreservoir 135 befindet sich Schmiermittel, welches vor dem Einfüllen durch Mischen von Schmierstoff insbesondere in Form von Mittelalkalischem Dieselmotorenöl und einem Trägerfluid in Form eines leichten Ölderivats hergestellt wurde. Das auf das Gewicht bezogene Mischungsverhältnis zwischen Schmierstoff und Trägerfluid ist dabei höher als 1:2, beispielsweise 1:5. Statt des leichten Ölderivats kann auch ein anderes flüssiges Trägerfluid benutzt werden, mit dem eine stabile Mischung mit dem Schmierstoff hergestellt werden kann.

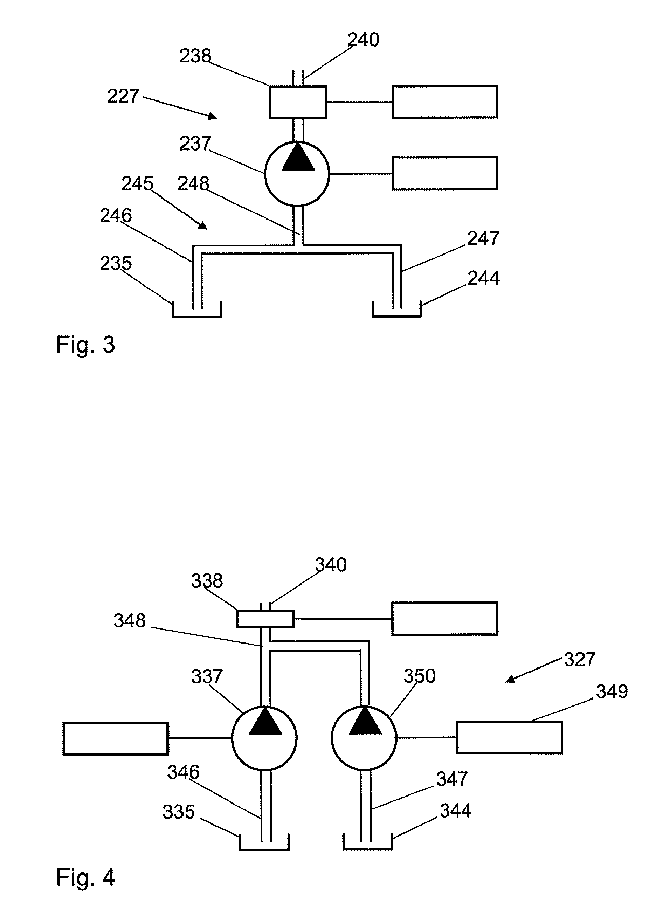

In Fig. 3 ist ein Ausschnitt einer zweiten Ausführungsform einer Schmiermittelversorgung 227 dargestellt. Dabei ist nur ein Teil einer Schmiermittelzuführleitung 240 dargestellt, welche zu einer nicht dargestellten Schmiermittelöffnung führt. Die Funktionsweise der Schmiermittelversorgung 227 ist sehr ähnlich zur Schmiermittelversorgung 127 aus Fig. 2, weshalb hauptsächlich auf die Unterschiede der beiden Schmiermittelversorgungen eingegangen wird.

Die Schmiermittelversorgung 227 weist ein Schmierstoffreservoir 235, welches reines Schmieröl enthält, und ein separates Trägerfluidreservoir 244, welches Wasser als Trägerfluid enthält, auf. Eine Fördereinrichtung in Form einer Schmiermittelpumpe 237 weist eine Ansaugleitung 245 auf, über die sowohl Schmieröl aus dem Schmierstoffreservoir 235, als auch Wasser aus dem Trägerfluidreservoir 244 angesaugt und damit gefördert werden kann. Die Ansaugleitung 245 weist dazu einen ersten Abschnitt 246 zum Schmierstoffreservoir 235 und einen zweiten Abschnitt 247 zum Trägerfluidreservoir 244 auf. Die beiden Abschnitte 246, 247 vereinigen sich zu einem gemeinsamen Abschnitt 248, der dann letztendlich zur Schmiermittelpumpe 237 führt. In dem genannten gemeinsamen Abschnitt 248 mischen sich das Schmieröl und das Wasser als Trägerfluid, so dass der gemeinsame Abschnitt 248 als eine Mischvorrichtung bezeichnet werden kann. Die Schmiermittelpumpe 237 fördert das durch das Mischen von Schmieröl und Wasser als Trägerfluid entstandene Schmiermittel in die Schmiermittelzuführleitung 240, über welche das Schmiermittel zur in Fig. 3 nicht dargestellten Schmiermittelöffnung geleitet werden kann. Zwischen dem gemeinsamen Abschnitt 248 und der Schmiermittelöffnung kann damit eine Fluidverbindung bestehen, welche über eine Ventilanordnung 238 hergestellt oder getrennt werden kann.

Das Mischungsverhältnis zwischen Schmieröl und Wasser als Trägerfluid, das sich nach dem Mischen im gemeinsamen Abschnitt 248 ergibt, wird durch eine geeignete Wahl der Durchmesser der ersten und zweiten Abschnitte 246, 247 der Ansaugleitung 245 eingestellt. Das auf das Gewicht bezogene Mischungsverhältnis zwischen Schmieröl und Wasser als Trägerfluid ist dabei höher als 1:2, beispielsweise 1:5. Das Mischungsverhältnis kann dabei immer gleich bleiben oder beispielsweise in Abhängigkeit der Betriebsbedingungen variabel sein.

Es ist auch möglich, dass zur Einstellung des genannten Mischungsverhältnisses in der Ansaugleitung unterschiedliche Blenden vorgesehen sind. Stattdessen oder zusätzlich können auch ansteuerbare Ventile vorgesehen sein.

Die Schmiermittelversorgung 227 in Fig. 3 verfügt über ein Schmiermittelreservoir und ein Trägerfluidreservoir. Es ist aber auch möglich, dass sowohl mehrere Schmiermittelreservoire und/oder mehrere Trägerfluidreservoire vorhanden sind. Dabei kann das Mischungsverhältnis immer gleich bleiben oder beispielsweise in Abhängigkeit der Betriebsbedingungen variabel sein.In Fig. 4 ist ein Ausschnitt einer dritten Ausführungsform einer Schmiermittelversorgung 327 dargestellt. Dabei ist nur ein Teil einer Schmiermittelzuführleitung 340 dargestellt, welche zu einer nicht dargestellten Schmiermittelöffnung führt. Die Funktionsweise der Schmiermittelversorgung 327 ist sehr ähnlich zur Schmiermittelversorgung 127 aus Fig. 2, weshalb hauptsächlich auf die Unterschiede der beiden Schmiermittelversorgungen eingegangen wird.

Die Schmiermittelversorgung 327 weist ein Schmierstoffreservoir 335, welches reines Schmieröl enthält, und ein separates Trägerfluidreservoir 344, welches Wasser als Trägerfluid enthält, auf. Eine Schmierstoff-Fördereinrichtung in Form einer Schmierstoffpumpe 337 saugt über eine erste Ansaugleitung 346 Schmieröl aus dem Schmierstoffreservoir 335 an und fördert dieses in einen gemeinsamen Leitungsabschnitt 348. Eine von einem zweiten Elektromotor 349 angetriebene Trägerfluid-Fördereinrichtung in Form einer Wasserpumpe 350 saugt über eine zweite Ansaugleitung 347 Trägerfluid in Form von Wasser aus dem Trägerfluidreservoir 344 an und fördert dieses ebenfalls in den gemeinsamen Leitungsabschnitt 348.In dem genannten gemeinsamen Leitungsabschnitt 348 mischen sich das Schmieröl und das Wasser als Trägerfluid, so dass der gemeinsame Abschnitt 348 als eine Mischvorrichtung bezeichnet werden kann. Der gemeinsame Abschnitt 348 geht in die Schmiermittelzuführleitung 340 über, über welche das Schmiermittel zur in Fig. 4 nicht dargestellten Schmiermittelöffnung geleitet werden kann. Zwischen dem gemeinsamen Abschnitt 348 und der Schmiermittelöffnung kann damit eine Fluidverbindung bestehen, welche über eine Ventilanordnung 338 hergestellt oder getrennt werden kann.

Das Mischungsverhältnis zwischen Schmieröl und Wasser als Trägerfluid, das sich nach dem Mischen im gemeinsamen Abschnitt 348 ergibt, wird durch eine geeignete Einstellung der Förderleistungen der Schmierstoffpumpe 337 und der Wasserpumpe 350 eingestellt. Das Mischungsverhältnis kann dabei immer gleich bleiben oder beispielsweise in Abhängigkeit der Betriebsbedingungen variabel sein.

Es ist auch möglich, dass zur Einstellung des genannten Mischungsverhältnisses in der Ansaugleitung unterschiedliche Blenden vorgesehen sind. Stattdessen oder zusätzlich können auch ansteuerbare Ventile vorgesehen sein.

Es können weitere Schmiermittelreservoire und/oder Trägerfluidreservoire vorhanden sein.

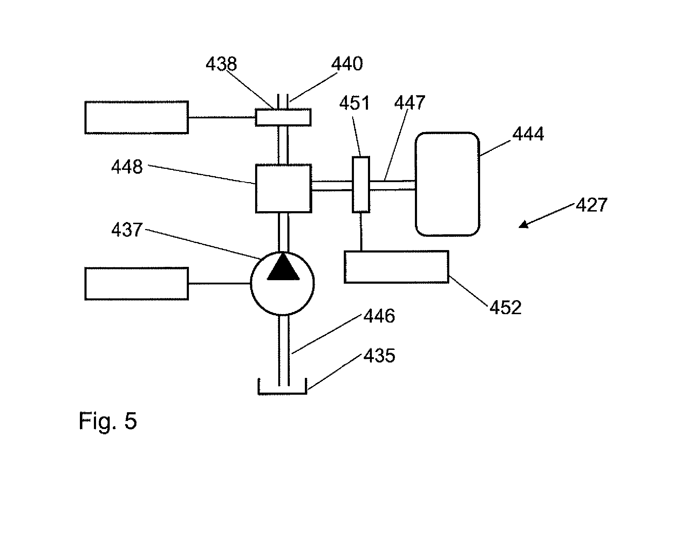

In Fig. 5 ist ein Ausschnitt einer dritten Ausführungsform einer Schmiermittelversorgung 427 dargestellt. Dabei ist nur ein Teil einer Schmiermittelzuführleitung 440 dargestellt, welche zu einer nicht dargestellten Schmiermittelöffnung führt. Die Funktionsweise der Schmiermittelversorgung 427 ist sehr ähnlich zur Schmiermittelversorgung 127 aus Fig. 2, weshalb hauptsächlich auf die Unterschiede der beiden Schmiermittelversorgungen eingegangen wird.

Die Schmiermittelversorgung 427 weist ein Schmierstoffreservoir 435, welches reines Schmieröl enthält, und ein separates Trägerfluidreservoir 444, welches Luft als Trägerfluid enthält, auf. Die Luft ist in dem Trägerfluidreservoir 444 unter einem gegenüber dem Umgebungsdruck erhöhten Druck gespeichert. Es kann eine zusätzliche, nicht dargestellte Pumpe vorgesehen sein, mittels welcher Luft in das Trägerfluidreservoir 444 nachgefördert werden kann. Statt Luft kann in dem Trägerfluidreservoir auch beispielsweise Stickstoff oder Kohlendioxid gespeichert sein.

Eine Schmierstoff-Fördereinrichtung in Form einer Schmierstoffpumpe 437 saugt über eine Ansaugleitung 446 Schmieröl aus dem Schmierstoffreservoir 435 an und fördert dieses in eine Mischvorrichtung 448. Das Trägerfluidreservoir 444 ist über eine Zuführleitung 447 ebenfalls mit der Mischvorrichtung 448 verbunden. An der Zuführleitung 447 ist eine Ventilanordnung 451 angeordnet, mittels welcher ein gewünschter Durchfluss durch die Zuführleitung 447 eingestellt werden kann. Die Ventilanordnung 451 wird von einer Steuerungseinrichtung 452 angesteuert. Über die Ventilanordnung 451 kann damit eine Fluidverbindung zwischen dem zweiten Trägerfluidreservoir 444 und der Mischvorrichtung 448 hergestellt werden.

In der Mischvorrichtung 448 mischen sich das Schmieröl und die Luft als Trägerfluid. Die Schmiermittelzuführleitung 440 ist ebenfalls mit der Mischvorrichtung 448 verbunden, so dass das durch Mischen von Schmieröl und Luft als Trägerfluid entstandene Schmiermittel über die Schmiermittelzuführleitung 440, zur in Fig. 5 nicht dargestellten Schmiermittelöffnung geleitet werden kann. Zwischen der Mischvorrichtung 448 und der Schmiermittelöffnung kann damit eine Fluidverbindung bestehen, welche über eine Ventilanordnung 438 hergestellt oder getrennt werden kann.

Das Mischungsverhältnis zwischen Schmieröl und Luft als Trägerfluid, das sich nach dem Mischen in der Mischvorrichtung 448 ergibt, wird durch eine geeignete Einstellung der Förderleistungen der Schmierstoffpumpe 437 und den Durchfluss der Luft durch die Verbindungsleitung 447 eingestellt.

## Patentansprüche

1. Verfahren zur Schmierung einer Kolben-Zylinder-Einheit einer Hubkolbenbrennkraftmaschine, insbesondere eines Zweitakt-Grossdieselmotors, mit einem Zylinderliner (11, 111) und einem Kolben (12, 112), welcher entlang einer Kolbenachse (A) im Zylinderliner (11, 111) in axialer Richtung hin- und her bewegbar angeordnet ist, wobei mittels einer Fördereinrichtung (137, 237, 337, 350, 437) Schmiermittel zu einer Schmiermittelöffnung (141) gefördert werden kann, welche so ausgeführt und angeordnet ist, dass Schmiermittel in den Zylinderliner (11, 111) eingebracht werden kann,
**dadurch gekennzeichnet, dass**
das Schmiermittel vor dem Einbringen in den Zylinderliner (11, 111) durch Mischen eines Schmierstoffs mit einem Trägerfluid erzeugt wird.

2. Verfahren nach Anspruch 1,
**dadurch gekennzeichnet, dass**
als Schmierstoff Schmieröl und/oder ein Festschmierstoff verwendet wird.

3. Verfahren nach Anspruch 1 oder 2,
**dadurch gekennzeichnet, dass**
als Trägerfluid Wasser verwendet wird.

4. Verfahren nach Anspruch 1, 2 oder 3,
**dadurch gekennzeichnet, dass**
der Schmierstoff mit dem Trägerfluid mit einem auf das Gewicht bezogenen Mischungsverhältnis von 1:2 oder höher gemischt wird.

5. Verfahren nach einem der Ansprüche 1 bis 4,
**dadurch gekennzeichnet, dass**
die Fördereinrichtung (137) das Schmiermittel aus einem Schmiermittelreservoir (135) fördert, welches fertig gemischtes Schmiermittel enthält.

6. Verfahren nach einem der Ansprüche 1 bis 4,
**dadurch gekennzeichnet, dass**
eine Fördereinrichtung (237, 337, 437) Schmierstoff aus einem Schmierstoffreservoir (235, 335, 435) fördert, welches vor Erreichen der Schmiermittelöffnung (11) mit dem Trägerfluid zu Schmiermittel vermischt wird.

7. Verfahren nach Anspruch 6,
**dadurch gekennzeichnet, dass**
mit der Fördereinrichtung (237) Schmierstoff aus dem Schmierstoffreservoir (235) und Trägerfluid aus einem ersten Trägerfluidreservoir (244) gefördert wird.

8. Verfahren nach Anspruch 6,
**dadurch gekennzeichnet, dass**
mit einer Schmierstoff-Fördereinrichtung (337) Schmierstoff aus dem Schmierstoffreservoir (335) und mit einer Trägerfluid-Fördereinrichtung (350) Trägerfluid aus dem ersten Trägerfluidreservoir (344) gefördert wird.

9. Verfahren nach Anspruch 6,
**dadurch gekennzeichnet, dass**
mit der Schmierstoff-Fördereinrichtung (437) Schmierstoff aus dem Schmierstoffreservoir (435) gefördert wird und Trägerfluid aus einem zweiten Trägerfluidreservoir (444) entnommen wird, in dem das Trägerfluid unter Druck gespeichert ist.

10. Zylinderschmiereinrichtung für eine Kolben-Zylinder-Einheit einer Hubkolbenbrennkraftmaschine, insbesondere eines Zweitakt-Grossdieselmotors, mittels welcher Schmiermittel aus einer Schmiermittelöffnung (141) ausgebracht werden kann, **gekennzeichnet durch**
eine Mischvorrichtung (248, 348, 448),
- welche mit der Schmiermittelöffnung (141) in Fluidverbindung bringbar ist,
- welcher Trägerfluid und mittels einer Schmierstoff-Fördereinrichtung (237, 337,437) Schmierstoff zugeführt werden kann und
- welche so ausgeführt ist, dass sich das Trägerfluid und der Schmierstoff zu Schmiermittel vermischt.

11. Zylinderschmiereinrichtung nach Anspruch 10,
**gekennzeichnet durch**,
eine Fördereinrichtung (237), welche Schmierstoff aus einem Schmierstoffreservoir (235) und Trägerfluid aus einem ersten Trägerfluidreservoir (244) zur Mischvorrichtung (248) fördern kann.

12. Zylinderschmiereinrichtung nach Anspruch 10,
**gekennzeichnet durch**,
- eine Schmierstoff-Fördereinrichtung (337), welche Schmierstoff aus dem Schmierstoffreservoir (335) und
- eine Trägerfluid-Fördereinrichtung (350), welche Trägerfluid aus dem ersten Trägerfluidreservoir (344) zur Mischvorrichtung (348) fördern kann.

13. Zylinderschmiereinrichtung nach Anspruch 10,
**gekennzeichnet durch**,
- eine Schmierstoff-Fördereinrichtung (437), welche Schmierstoff aus dem Schmierstoffreservoir (435) zur Mischvorrichtung (448) fördern kann und
- ein zweites Trägerfluidreservoir (444), in welchem Trägerfluid unter Druck speicherbar ist und welches mit der Mischvorrichtung (448) in Fluidverbindung bringbar ist.

14. Kolben-Zylinder-Einheit für eine Hubkolbenbrennkraftmaschine, insbesondere einen Zweitakt-Grossdieselmotors,
- mit einem Zylinderliner (11, 111) und einem Kolben (12, 112), wobei der Kolben (12, 112) entlang einer Kolbenachse (A) im Zylinderliner (11, 111) in axialer Richtung hin- und her bewegbar angeordnet ist, und
- einer Zylinderschmiereinrichtung (127) nach einem der Ansprüche 9 bis 12.
